# DEMANDE DE BREVET EUROPEEN

(11) **EP 1 736 440 A1**
(43) Date de publication de la demande: **27.12.2006**
(21) Numéro de dépôt: 05447141.2
(22) Date de dépôt: 20.06.2005
(51) Int. Cl.: C01B 31/02

(54) **Procédé de fabrication de nanotubes de carbone**

(71) Demandeur: Nanocyl S.A., 4060 Sambreville (BE)
(72) Inventeur: Liegeois, Fanny, 5020 Vedrin (BE); Vandecasserie, Christian, 1380 Lasnes (BE)
(74) Mandataire: Van Malderen, Michel

(57) **Abrégé**

La présente invention se rapporte à un procédé de fabrication de nanotubes de carbone comportant les étapes suivantes :
a) réalisation d'une pâte visqueuse à partir d'un mélange de support catalytique et de sel de catalyseur dissout dans l'eau,
b) application de ladite pâte visqueuse en couches minces sur un support inerte pour constituer une couche mince catalytique,
c) séchage et activation de ladite couche mince catalytique dans un four à une température supérieure à 600°C,
d) mise en contact de ladite couche mince catalytique avec une source de carbone gazeuse à une température entre 650° et 750°C pour former les nanotubes de carbone.

## Description

### Objet de l'invention

La présente invention se rapporte à la fabrication de nanotubes de carbone à partir d'une source de carbone gazeuse mise en contact avec un catalyseur supporté appliqué en couches minces sur un support inerte.

### Etat de la technique

Lorsqu'il s'agit de produire des nanotubes de carbone à grande échelle, il faut maximiser la disponibilité et donc l'accessibilité du site catalytique pour la source de carbone gazeuse afin d'augmenter le rendement à la fois par rapport à la source de carbone et par rapport à la consommation de catalyseur.

Pour augmenter l'accessibilité du site catalytique, différentes solutions ont été envisagées. L'une de ces solutions est le four circulaire tournant tel que décrit dans WO 2004/069742 A1. Malheureusement, les dimensions des fours tournants sont telles qu'elles sont incompatibles avec une augmentation du rendement pour une production à grande échelle car le four tournant ne comporte finalement que peu de catalyseur et une production industrielle nécessiterait un four tournant d'une taille semblable à un four de cimenterie.

Un autre moyen pour augmenter l'accessibilité des sites catalytiques est l'utilisation de lits fluidisés. Les lits fluidisés permettent d'augmenter la réaction de surface entre le catalyseur supporté et la source de carbone gazeuse sans augmenter inconsidérément le volume du réacteur. La technologie du lit fluidisé est décrite de manière exhaustive dans le document WO-A-03/002456. Cette technologie nécessite cependant la fabrication d'un catalyseur supporté dans un premier réacteur suivi de la fabrication des nanotubes de carbone dans un autre réacteur ; l'ensemble donnant lieu à une configuration relativement complexe et difficilement transposable à une production industrielle à grande échelle.

### Buts de l'invention

La présente invention vise à fournir un procédé de fabrication de nanotubes de carbone simple et reproductible qui optimise le bilan énergétique de la fabrication des nanotubes de carbone notamment en combinant les étapes de séchage et d'activation du catalyseur et qui constitue une alternative à la méthode de synthèse par lit fluidisé (US 2004/0241080).

### Résumé de l'invention

La présente invention divulgue un procédé de fabrication de nanotubes de carbone comportant les étapes suivantes :
a) réalisation d'une pâte visqueuse à partir d'un mélange de support catalytique et de sel de catalyseur dissout dans l'eau,
b) application de ladite pâte visqueuse en couches minces sur un support inerte pour constituer une couche mince catalytique,
c) séchage et activation de ladite couche mince catalytique dans un four à une température supérieure à 600°C,
d) mise en contact de ladite couche mince catalytique avec une source de carbone gazeuse à une température entre 650° et 750°C pour former les nanotubes de carbone.

Selon des formes particulières de réalisation, l'invention comporte l'une ou plusieurs des caractéristiques suivantes :
- la réaction de formation des nanotubes de carbone est conduite jusqu'à consommation complète de ladite couche mince catalytique ;
- le support catalytique pour la réalisation de ladite pâte est du Al(OH)₃ et lesdits sels de catalyseur comportent du Fe(NO₃)₃.9H₂O et du Co(OAc)2.4H₂O ;
- ladite couche catalytique mince a une épaisseur à l'état humide inférieure à 1000µm ;
- ladite couche catalytique mince a une épaisseur à l'état humide inférieure à 300µm ;
- le support inerte est une plaque de quartz ;
- les étapes c) et d) se font de manière continue dans un même four ;
- l'application de ladite couche catalytique mince se fait par une racle ou un spray ;
- le rendement en nanotubes de carbone par rapport à la quantité totale de carbone déposée est supérieur à 85% ;
- le nanotube de carbone obtenu par le procédé de la revendication 1 a une température de décomposition supérieure à 489°C avec TAinstr High Resolution R5 S5 (R = resolution, S = sensitivity).

### Brève description des figures

La figure 1 représente le rendement de production de nanotubes de carbone en fonction de l'épaisseur de la couche mince catalytique à l'état humide.

La figure 2 représente une thermogravimétrie de comparaison entre les nanotubes de carbone fabriqués selon un four rotatif et selon le procédé de la présente invention.

La figure 3 représente un schéma de principe d'un dispositif permettant de réaliser des couches catalytiques minces. Il s'agit d'une racle comportant un petit réservoir contenant le catalyseur pâteux permettant de déposer celui-ci par couches d'épaisseurs variées.

La figure 4 représente le schéma d'une ligne de fabrication de nanotubes de carbone en continu combinant l'étape de séchage et d'activation du catalyseur.

Les figures 5a, 5b et 5c, représentent le principe des étapes de réalisation de la couche mince avec dépôt d'une pâte visqueuse comportant à la fois le support catalytique et le catalyseur actif en couches minces (5a), le séchage et activation combinée à haute température accompagné d'un craquellement de la couche et de la perte d'adhésion par rapport au support (5b), ainsi que la synthèse de nanotubes de carbone sur ladite couche mince résultant en une couche de quelques centimètres d'épaisseur de nanotubes de carbone.

### Description détaillée de l'invention

L'idée de la présente invention est de réaliser la synthèse des nanotubes de carbone à partir d'une couche catalytique mince appliquée sur un support inerte comme par exemple le quartz, de sécher et d'activer ensuite ce catalyseur au four et de le mettre finalement en contact avec une source de carbone.

Pour ce faire, on réalise tout d'abord un mélange entre le support catalytique et le catalyseur dans l'eau pour obtenir la consistance d'une pâte visqueuse que l'on étale ensuite par un moyen tel qu'une racle sur un support inerte. L'épaisseur de cette couche de pâte visqueuse pouvant aller de quelques dizaines de microns à quelques centaines de microns. Toutefois, il s'est avéré que le rendement de synthèse de nanotubes de carbone par rapport à la quantité de catalyseur est maximale avec des couches très minces, de l'ordre de 200 à 300µm. Ceci semble logique puisque seule la surface de la couche est en contact avec la source de carbone gazeuse.

**Tableau 1**

| **Influence de l'épaisseur de la couche sur le rendement de la réaction** | | |
|---|---|---|
| **Epaisseur de la couche (µm)** | **Résidu TG (%)** | **% en C** |
| 175 | 9,99 | 90,01 |
| 300 | 9,03 | 90,97 |
| 500 | 11,36 | 88,64 |
| 700 | 14,5 | 85,5 |
| 1000 | 20,2 | 79,8 |

Les plaques de support inerte, généralement constituées de quartz muni d'un film ou d'une couche mince catalytique sont ensuite séchées et activées dans un four à une température supérieure à 600°C, avant d'être mis en contact avec une source de carbone gazeuse permettant le démarrage de la synthèse de nanotubes de carbone.

L'adhérence du catalyseur à la plaque de support inerte (quartz) est telle qu'au cours de la synthèse et sous l'effet du poids des chaînes de nanotubes de carbone synthétisées, le catalyseur sur lequel sont accrochés lesdites chaînes de nanotubes de carbone se détache naturellement de la plaque, ce qui permet de récupérer facilement les nanotubes de carbone synthétisés à la sortie du four.

Selon le rendement obtenu, on peut prévoir une étape de purification pour isoler les nanotubes de carbone du catalyseur.

Comme évoqué plus haut, l'augmentation du rendement de synthèse des nanotubes est inversement proportionnelle à l'épaisseur de la couche catalytique. C'est ainsi que pour une épaisseur de couche catalytique humide de 1000µm, le rendement en nanotubes de carbone est de 80% par rapport au dépôt total de carbone. On atteint cependant un seuil d'optimisation aux alentours d'une épaisseur de couche de catalyseur de 200µm.

Pour une épaisseur de couche humide de 300µm, le rendement en nanotubes de carbone est d'environ 91% par rapport au dépôt total de carbone.

**Tableau 2**

| **Couche (µm)** | **Résidu TG (%)** | **% en C** | **M NTs B (g)** | **M NTs P (g)** |
|---|---|---|---|---|
| 300 | 9,03 | 90,97 | 17,70 | 15,91 |
| 500 | 11,36 | 88,64 | 27,00 | 23,70 |
| 700 | 14,50 | 85,50 | 35,70 | 30,30 |
| 1000 | 20,20 | 79,80 | 37,00 | 31,57 |

| | | | | |
|---|---|---|---|---|
| * en considérant que 2, 86 moles de C₂H₄ sont envoyées en 20 min | | | | |

Pour réaliser la pâte visqueuse servant à la fabrication de la couche mince catalytique, on mélange dans un premier temps un sel de cobalt et un sel de fer, par exemple du Co(OAc)₂ avec du Fe(No₃)₃, avec de l'eau, cette solution aqueuse est ensuite mélangée avec du Al(OH)₃ en ajustant la quantité d'eau pour obtenir une pâte qui s'étale facilement sur le support inerte. La pâte est ensuite versée dans un « plate-coater », ce dispositif permet de choisir l'épaisseur de la couche que l'on va réaliser. Une fois que la couche mince est réalisée, l'ensemble est mis au four à une température minimum de 600°C, permettant le séchage et l'activation simultanée de ladite couche mince. Cette étape dure environ 30 minutes et est suivie de la mise en contact avec la source de carbone gazeuse (éthylène ou méthane) durant environ 10 minutes, durant lesquelles la synthèse de nanotubes s'opère. Les supports inertes sont ensuite récupérés à la sortie du four avec leur quantité de nanotubes de carbone synthétisée.

Dans le Tableau 3, l'inventeur représente les résultats d'un test comparatif entre différents procédés de fabrication de nanotubes à partir du même catalyseur.

Un premier procédé de fabrication discontinue est constitué d'un four tubulaire statique dans lequel on introduit une nacelle possédant une forme de portion de circonférence et dans laquelle on a placé le catalyseur ; dans ce cas, la surface de catalyseur accessible à la source de carbone est estimée approximativement.

Le four tubulaire rotatif est le deuxième procédé de fabrication de nanotubes représenté dans le Tableau 3. Il s'agit d'un tube de quartz porté à haute température, maintenu en rotation permanente selon une légère pente dans lequel on a progressivement et en continu introduit une quantité déterminée de catalyseur. Ici également, dans la mesure où le four tubulaire est en mouvement permanent, la surface de catalyseur accessible à la source de carbone a été estimée par l'intermédiaire de caméras permettant de visualiser la quantité de catalyseur. Par ailleurs, la surface active est « rafraîchie » en permanence, ce qui rend l'estimation difficile.

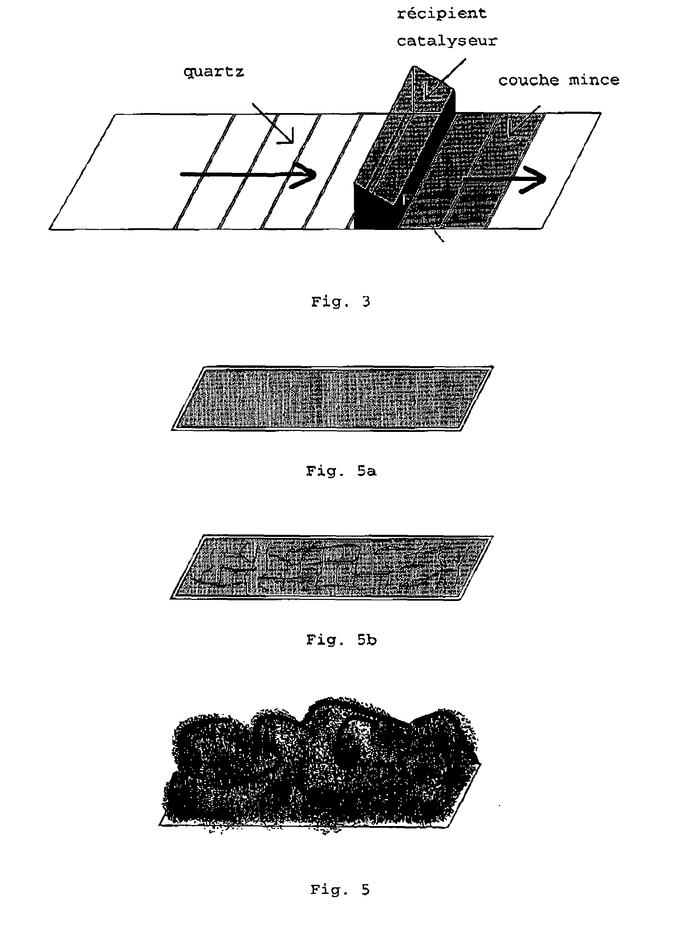

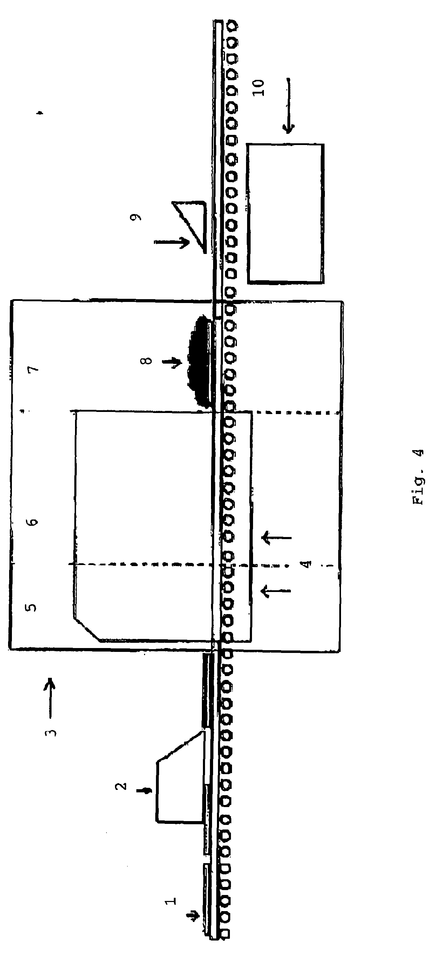

Le troisième procédé de fabrication de nanotubes, objet de la présente invention, est la fabrication de nanotubes de carbone sur couche mince. Ce procédé de fabrication est représenté dans la Fig. 4 et la réalisation des couches minces est représentée dans la Fig. 3. Dans le cadre de la présente invention, la surface de catalyseur accessible à la source de carbone a pu être déterminée avec précision puisqu'il s'agit de l'enduction de couches de catalyseur sur des surfaces inertes de tailles prédéterminées. La quantité de catalyseur utilisée ainsi que la quantité de nanotubes produits par l'intermédiaire de ce catalyseur est également indiqué dans le Tableau 3.

Les deux dernières colonnes du Tableau 3 représentent le rendement en nanotubes par quantité de catalyseur et unité de surface de catalyseur accessible à la source de carbone et par unité de temps, ce qui fournit une donnée intéressante quant à l'efficacité de la surface utilisée : on voit que dans le cas de la couche mince, celle-ci a une efficacité environ deux fois meilleure que le catalyseur présent dans le four tubulaire malgré le « rafraîchissement » permanent et environ quatre fois meilleure que le catalyseur présent dans une nacelle d'un four statique.

Par ailleurs, la dernière colonne de ce tableau montre que le rendement en nanotubes par masse de catalyseur consommé et par unité de temps est dans le procédé selon l'invention environ quatre fois supérieur au rendement obtenu dans le four tubulaire statique avec nacelle et est légèrement supérieur au rendement obtenu dans un four tubulaire rotatif. Le dispositif de fabrication de nanotubes représenté dans la figure 4 est par ailleurs fortement simplifié puisqu'il est composé d'opérations simples (fabrication de al pâte catalytique, enduction des plaques avec cette pâte, passage au four et récolte des nanotubes en fin de ligne).

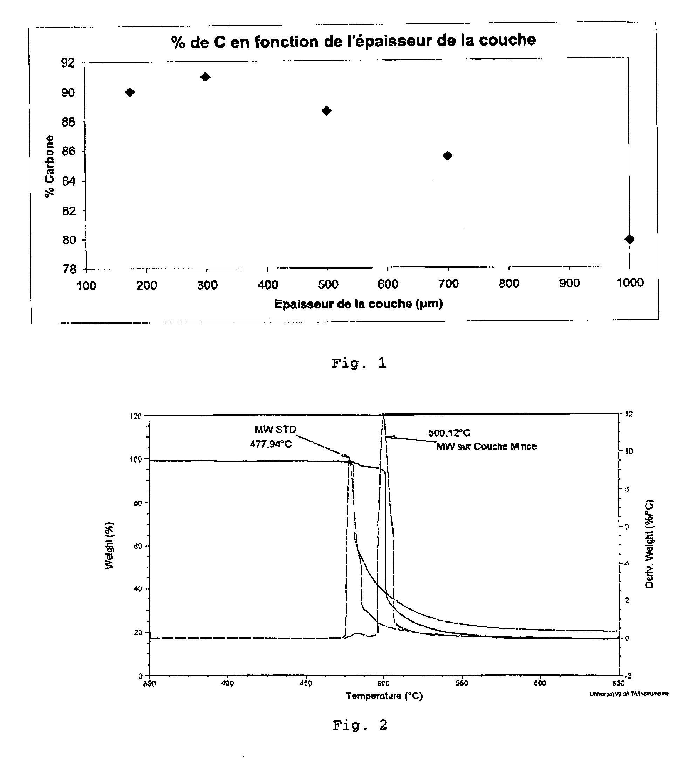

Le procédé de fabrication de nanotubes de carbone sur couches minces de catalyseur présente donc un intérêt commercial évident puisque l'accessibilité de la source de carbone au catalyseur est totalement optimisée dans cette méthode sans avoir recours à des mécaniques sophistiquées du type four rotatif ou lit fluidisé. Par ailleurs, la qualité des nanotubes obtenus et notamment leur pureté semble inégalée selon le procédé de l'invention puisque des températures de décomposition de 500°C sont atteintes. Elles sont donc d'envirion 20°C supérieures à celles obtenues dans les procédés standards (voir Fig. 2).

**Tableau 3**

| **Procédé de fabrication** | **Temps de réaction (min.)** | **Dimensions du four (cm)** | **Surface de catalyseur accessible à la source de carbone** | **Quantité de catalyseur utilisé (g)** | **Quantité de nanotubes produits** | **Rendement en NT par quantité de catalyseur, unité de surface de catalyseur accessible et unité de temps (g/cm**²**/h)** | **Rendement en NT par masse de catalyseur consommé et par unité de temps (g/gCata/h)** |
|---|---|---|---|---|---|---|---|
| Four tubulaire statique avec nacelle (discontinu) | 45 | ∅7 x 50cm | 275cm² (estimation) | 5 | 32 | 0.153 | 8.4 |
| Four tubulaire rotatif (continu) | 20 | ∅20 x 150cm | 3142cm² (estimation) | 33 | 333 | 0.318 | 30.3 |
| Four avec catalyseur sur couches minces (continu ou discontinu) | 20 | 600 x 10 x 10cm | 6000cm² | 120 | 1368 | 0.684 | 34.2 |

**Légende**
1. Plaque en quartz
2. Catalyseur sous forme de pâte liquide
3. Zone sous atmosphère contrôlée
4. Four de synthèse réglé à 700°C
5. Zone 1 : purge N₂ 10 minutes
6. Zone 2 : C₂H₄ 20 minutes
7. Zone 3 : purge pour refroidissement 10 minutes
8. Nanotubes
9. Racloir
10. Pot de récolte

## Revendications

1. Procédé de fabrication de nanotubes de carbone comportant les étapes suivantes :
a) réalisation d'une pâte visqueuse à partir d'un mélange de support catalytique et de sel de catalyseur dissout dans l'eau,
b) application de ladite pâte visqueuse en couches minces sur un support inerte pour constituer une couche mince catalytique,
c) séchage et activation de ladite couche mince catalytique dans un four à une température supérieure à 600°C,
d) mise en contact de ladite couche mince catalytique avec une source de carbone gazeuse à une température entre 650° et 750°C pour former les nanotubes de carbone.

2. Procédé selon la revendication 1,
**caractérisé en ce que** la réaction de formation des nanotubes de carbone est conduite jusqu'à consommation complète de ladite couche mince catalytique.

3. Procédé selon la revendication 1,
**caractérisé en ce que** le support catalytique pour la réalisation de ladite pâte est du Al(OH)₃ et lesdits sels de catalyseur comportent du Fe(NO₃)₃.9H₂O et du Co(OAc)2.4H₂O.

4. Procédé selon la revendication 1,
**caractérisé en ce que** ladite couche catalytique mince a une épaisseur à l'état humide inférieure à 1000µm.

5. Procédé selon la revendication 1,
**caractérisé en ce que** ladite couche catalytique mince a une épaisseur à l'état humide inférieure à 300µm.

6. Procédé selon la revendication 1,
**caractérisé en ce que** le support inerte est une plaque de quartz.

7. Procédé selon la revendication 1,
**caractérisé en ce que** les étapes c) et d) se font de manière continue dans un même four.

8. Procédé selon la revendication 1,
**caractérisé en ce que** l'application de ladite couche catalytique mince se fait par une racle ou un spray.

9. Procédé selon la revendication 1,
**caractérisé en ce que** le rendement en nanotubes de carbone par rapport à la quantité totale de carbone déposée est supérieur à 85%.

10. Nanotube de carbone obtenu par le procédé de la revendication 1, ayant une température de décomposition supérieure à 489°C avec TAinstr High Resolution R5 S5 (R = resolution, S = sensitivity).
